(19) 

**Europäisches Patentamt**
**European Patent Office**
**Office européen des brevets**

(11) **EP 4 610 424 A1**

(12) # EUROPEAN PATENT APPLICATION
published in accordance with Art. 153(4) EPC

(43) Date of publication:
**03.09.2025 Bulletin 2025/36**

(21) Application number: **23882713.3**

(22) Date of filing: **26.10.2023**

(51) International Patent Classification (IPC):
*D21H 15/02* (2006.01)  *B29B 11/16* (2006.01)
*D21H 11/00* (2006.01)  *D21H 13/00* (2006.01)
*D21H 13/36* (2006.01)  *B29K 105/12* (2006.01)

(52) Cooperative Patent Classification (CPC):
**B29B 11/16; D21H 11/00; D21H 13/00;**
**D21H 13/36; D21H 15/02**

(86) International application number:
**PCT/JP2023/038647**

(87) International publication number:
**WO 2024/090509 (02.05.2024 Gazette 2024/18)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **27.10.2022 JP 2022172675**

(71) Applicant: **Nippon Paper Industries Co., Ltd.**
**Tokyo 114-0002 (JP)**

(72) Inventors:
• **IMAI, Daisuke**
**Tokyo 114-0002 (JP)**

• **NAKANISHI, Nobuo**
**Tokyo 114-0002 (JP)**
• **NAKADA, Sakiko**
**Tokyo 114-0002 (JP)**
• **HARA, Yayoi**
**Tokyo 114-0002 (JP)**
• **TAKAYAMA, Masato**
**Tokyo 114-0002 (JP)**

(74) Representative: **Hoffmann Eitle**
**Patent- und Rechtsanwälte PartmbB**
**Arabellastraße 30**
**81925 München (DE)**

(54) **FIBER MOLDING, FIBROUS BINDER, AND APPLICATIONS THEREOF**

(57)    One of problems to be solved is to provide a formed fiber product having sufficient strength and a composite material using the formed fiber product. Furthermore, another one of problems to be solved is to provide a formed fiber product having sufficient strength and a composite material using the formed fiber product, by use of carbon fiber.

A formed fiber product that has been processed into nonwoven fabric or the like is manufactured by use of a fibrous binder that has been fibrillated. An embodiment of the formed fiber product includes a main fiber material and a fibrous binder and has a content ratio of 1 to 20 parts by weight of the fibrous binder to 100 parts by weight of the main fiber material, and the fibrous binder has a crill ratio ranging from 1.25 to 3.00.

**EP 4 610 424 A1**

## Description

### Technical Field

The present invention relates to a formed fiber product, a fibrous binder used for the formed fiber product, and application of the formed fiber product and fibrous binder.

### Background Art

Fiber reinforced plastics (FRPs) are reinforced plastic materials with various improved functions, the reinforced plastic materials each being a composite made of: a matrix, which is, for example, epoxy resin or phenolic resin; and a fiber material, such as glass fiber or carbon fiber. Among FRPs, carbon fiber reinforced plastics (CFRPs) using carbon fiber are used in a very wide range of fields because carbon fiber is a material having excellent strength and an excellent elastic modulus while being lightweight. For example, CFRPs are used in motor vehicle parts, ship parts, aircraft parts, spacecraft parts, drone parts, construction materials, sporting goods, parts for electronic devices such as personal computers, and parts for electric appliances.

In general, FRP is manufactured by impregnation of a sheet fiber material with a resin component serving as a matrix. Many different technologies for improving the performance of FRPs are being developed and one of important factors in manufacturing a composite material using such a fiber material is that the formed fiber product itself desirably has sufficient strength before being impregnated with a matrix.

Representative examples of a sheet fiber material used in FRPs include nonwoven fabric. Various methods of manufacturing nonwoven fabric from a fiber material have already been developed, without being limited to the field of FRPs. Research and development have also been advanced for manufacture of nonwoven fabric premised on use of FRPs described above.

For example, in a formed fiber-reinforced plastic product using thermoplastic resin as a binder for carbon fiber, if the thermoplastic resin melts at a high temperature in heat melting, fixing of tangled points between fibers of carbon fiber is ruined. As a result, the three-dimensional structure of the carbon fiber is deformed, the carbon fiber tends to be oriented in a specific direction, and the strength of the formed fiber-reinforced plastic product may be reduced. To solve this problem, in relation to a paper sheet before impregnation with resin, a method of using mixed dispersion liquid containing carbon fiber and water-swollen fibrillated fiber and supplying the mixed dispersion liquid to a papermaking process has been disclosed (for example, Patent Literature 1).

Furthermore, in a case where inorganic fiber, such as carbon fiber, glass fiber, or metallic fiber, is processed into nonwoven fabric by a wet papermaking method, inorganic fiber has poor dispersiveness in water because of its hydrophobicity. Obtaining an inorganic fiber sheet having good texture is thus difficult and to solve this problem, a technology using a dispersing agent including a given surfactant or resin has been disclosed (for example, Patent Literature 2).

Incidentally, promotion of sustainable development has been demanded recently as a global consensus, and as more composite materials each including fiber, such as carbon fiber, and a matrix are used as mentioned above, development of recycling of the composite materials is also demanded.

### Citation List

### Patent Literature

Patent Literature 1: International Publication No. WO 2014/021366
Patent Literature 2: Japanese Patent Application Laid-open No. 2017-057511

### Summary of Invention

### Technical Problem

As described above, as one measure to make good use of excellent characteristics of fiber that is to be included in FRPs, there is a demand for excellent strength of formed fiber products themselves before impregnation with their matrices. However, if a fiber component, such as carbon fiber, is separated for recycling from a formed product, such as CFRP, regenerated carbon fiber obtained by the separation is in a state largely different from that of unused fiber. In many cases, the regenerated carbon fiber is composed of fibers that have been more fragmented and have become shorter than those of unused carbon fiber. Even if regenerated carbon fiber is used to be processed into a formed fiber product sheet again, the regenerated carbon fiber is unable to be processed into a sheet shape in the first place, or obtaining performance, such as strength and resistance required in a material for FRPs is difficult even if the regenerated carbon fiber is able to be processed into a sheet shape.

Therefore, increasing the amount of a binder included may be considered as one measure to manufacture a formed fiber product sheet using regenerated fiber. However, in terms of manufacturing FRP having desired performance, there has been a demand for minimization of the amount of the binder to make better use of characteristics of the main fiber material. Furthermore, there has been a demand for suitable binders for manufacturing formed products using various kinds of fiber materials, without being limited to carbon fiber.

In view of the above described circumstances, one of problems to be solved is to provide a formed fiber product having sufficient strength and a composite material using the formed fiber product.

Furthermore, another one of the problems to be solved is to provide a formed fiber product having sufficient strength and a composite material using the formed fiber product, by use of regenerated carbon fiber.

Furthermore, still another one of the problems to be solved is to provide a formed fiber product having sufficient strength and a composite material using the formed fiber product, by use of various kinds of fiber materials.

**Solution to Problem**

As a result of diligent research, the inventors have found that using a fibrillated fibrous binder enables formation of a formed fiber product having given strength and suitable for manufacture of FRP. The present disclosure is based on these findings.

The invention presented by the present disclosure can be understood versatilely through various aspects and, for example, may include embodied aspects as solutions to the problems, as follows. In the present disclosure, the invention presented by the present disclosure may simply be referred to as "the present invention" comprehensively and conceptually or according to the individual aspects.

[1] A formed fiber product, comprising:

a main fiber material and a fibrous binder;
a content ratio of 1 to 20 parts by weight of the fibrous binder to 100 parts by weight of the main fiber material; and
a crill ratio of the fibrous binder, the crill ratio ranging from 1.25 to 3.00.

[2] The formed fiber product according to [1] above, wherein the fibrous binder has a mean fiber length ranging from 0.30 to 2.50 mm.

[3] The formed fiber product according to [1] or [2] above, wherein the main fiber material is one, two, or more kinds selected from a group consisting of carbon fiber, glass fiber, metallic fiber, natural fiber, cellulosic fiber, regenerated fiber, semi-synthetic fiber, and synthetic fiber.

[4] The formed fiber product according to [1] or [2] above, wherein the main fiber material is one, two, or more kinds selected from a group consisting of carbon fiber, glass fiber, PET fiber, and aramid fiber.

[5] The formed fiber product according to [1] or [2] above, wherein the main fiber material is carbon fiber.

[6] The formed fiber product according to any one of [3] to [5] above, wherein the carbon fiber is carbon fiber to be used for the first time, recycled carbon fiber, or fiber that is a mixture of the carbon fiber to be used for the first time and the recycled carbon fiber.

[7] The formed fiber product according to any one of [1] to [6] above, wherein the fibrous binder is fibrillated cellulose fiber.

[8] The formed fiber product according to any one of [1] to [7] above, wherein the fibrous binder has a fineness ratio of 95% or less.

[9] A formed fiber-reinforced resin product, comprising:

the formed fiber product according to any one of [1] to [8] above; and
a resin component that the formed fiber product has been impregnated with.

[10] A fibrous binder, comprising:

fibrillated cellulose fiber having a crill ratio ranging from 1.25 to 3.00 and a fineness ratio of 95% or less,
the fibrous binder being to be used in a formed fiber product.

**Advantageous Effects of Invention**

According to one or more aspects of the invention presented by the present disclosure, a formed fiber product having sufficient strength is able to be provided.

Furthermore, according to one or more aspects of the invention presented by the present disclosure, a formed fiber product having sufficient strength is able to be provided using regenerated carbon fiber.

Furthermore, according to one or more aspects of the invention presented by the present disclosure, a formed fiber product having sufficient strength is able to be provided using various kinds of fiber materials.

Furthermore, according to one or more aspects of the invention presented by the present disclosure, various excellent composite materials are able to be provided using the formed fiber products mentioned above.

**Description of Embodiments**

The present disclosure is made through an international application based on the Patent Cooperation Treaty and is made in Japanese language at the time of application. Upon entry to designated states and elected states, the present disclosure is to be translated into languages required by these states. In the present disclosure, unless stated otherwise, nouns in Japanese language may be singular or plural in accordance with the full text or the context of the present disclosure. Furthermore, upon translation into a language, such as English language, where nouns have countable nouns and uncountable nouns and countable nouns each have a singular form and a plural form that are distinguished from each other, the singular form includes a plural case and the plural form includes a singular case in accordance with the full text or the context of the present disclosure, unless stated otherwise.

Embodiments of the present invention will be described hereinafter.

In the present disclosure, unless otherwise specified, the term, "an embodiment," in relation to the present invention refers to an optional embodiment for description of the present invention in detail and does not deny or limit the presence of any other embodiment or plural embodiments. As described hereinafter, plural embodiments may be included in the scope of the present invention. The plural embodiments may be provided, for example, in modified forms through combination of components (or technical features) disclosed herein in various ways. Furthermore, "embodiments" simply referred to in the present disclosure include, unless otherwise specified, one embodiment or plural embodiments.

In the present disclosure, the phrase, "ranging from AA to BB," in relation to a numerical range means "being in the range of AA or more and BB or less," (where "AA" and "BB" are any numerical values) unless specified otherwise. Furthermore, the units of the lower limit and the upper limit are the same as the unit written immediately after the upper limit (that is, "BB" herein), unless specified otherwise. Furthermore, as a combination of a lower limit value and an upper limit value of a numerical range in the present disclosure, a combination of numerical values can be optionally selected from a group of numerical values including lower limit values and upper limit values described as examples of preferred numerical values. Furthermore, the expression, "X and/or Y" means both X and Y, or either X or Y.

**1. Fibrous Binder**

A fibrous binder of the present disclosure may be suitably used as a binder for binding a main fiber material composing the body of a formed fiber product described in detail below.

Examples of the fibrous binder may preferably include fibrillated cellulose fiber. In the present disclosure, "being fibrillated" means that the fiber is made fluffy or finely split by rubbing or beating/refining. In other words, it may be said that small fibers (that is, fibrils) are raised from the bodies of the fibers by friction or beating/refining. In the present disclosure, "fibrillated cellulose fiber" refers to cellulose fiber that has been fibrillated and has small fibers (fibrils) that have become fluffy on surfaces of the fibers.

Examples of the cellulose fiber may include natural cellulose fiber, chemically denatured cellulose fiber, and regenerated cellulose fiber. Examples of the natural cellulose fiber may include wood pulp, such as conifer pulp and broad-leaved tree pulp, and herbaceous plant pulp, such as straw pulp, bamboo pulp, linter pulp, hemp pulp, and kenaf pulp. Examples of the chemically denatured cellulose fiber may include cellulose fiber that has been oxidized, etherified, cationized, or esterified. Examples of the regenerated cellulose fiber may include rayon, cupra, and Lyocell.

That is, fibrillated cellulose can be obtained by fluffing up surfaces of fibers and making the fibers fluffy through processing, such as rubbing or beating/refining of cellulose fiber, using, for example, a single disc refiner (SDR), a double disc refiner (DDR), a beater, a mixer, a mill, or a grinding device. A suspension or slurry of the cellulose fiber may be prepared and subjected to high-speed and high-pressure processing using a homogenizer.

The fibrous binder preferably satisfies at least one or any two or more of indicators related to the following characteristics.

Freeness

In the present disclosure, "freeness" is one of indicators indicating fibrillation of fiber and is found by measurement of how much water is drained when water is drained from slurry of a sample (for example, the fibrous binder in this disclosure) through a given filter at once. More specifically, a value of freeness according to the present disclosure can be found by a measurement method used in Examples described below. The higher the value of freeness, the more easily the water is drained, and the fiber can thus be estimated to have less fluffing. Conversely, the lower the value of freeness, the less easily the water is drained, and the fiber can thus be estimated to have more fluffing. The freeness is also called the degree of beating/refining.

The fibrous binder may preferably have freeness ranging from 0 to 100 ml in a case where the freeness is measured according to a specific test method performed with respect to Examples described in detail below. The freeness being in this range contributes to formation of a fibrous formed product having sufficient strength.

In terms of further pursuit of strength of the fibrous formed product, the lower limit of the freeness of the fibrous binder theoretically may be most preferably 0 and practically 5 ml or more.

The upper limit of the freeness of the fibrous binder on the other hand may be more preferably 50 ml or less and even more preferably 40, 30, or 20 ml or less.

Mean Fiber Length of Fibrous Binder

The fibrous binder may preferably have a mean fiber length ranging from 0.30 to 2.50 mm. The mean fiber length being in this range contributes to formation of a fibrous formed product having sufficient strength. In further pursuit of strength of the fibrous formed product, more preferable upper limits and lower limits thereof may be as follows.

The lower limit of the mean fiber length of the fibrous binder may be more preferably 0.35 mm or more, and even more preferably 0.40, 0.45, or 0.50 mm or more.

The upper limit of the mean fiber length of the fibrous binder may be more preferably 2.00, 1.75, or 1.50 mm or less, and even more preferably 1.25 mm or less.

Mean Fiber Diameter of Fibrous Binder

The fibrous binder may preferably have a mean fiber diameter ranging from 10.0 to 40.0 $\mu$m. The mean fiber diameter being in this range contributes to formation of a fibrous formed product having sufficient strength. In terms of further pursuit of strength of the fibrous formed product, more preferable upper limits and lower limits thereof are as follows.

The lower limit of the mean fiber diameter of the fibrous binder may be more preferably 15.0 $\mu$m or more, and even more preferably 20.0 $\mu$m or more.

The upper limit of the mean fiber diameter of the fibrous binder may be more preferably 38.0 $\mu$m or less, and even more preferably 35.0 $\mu$m or less.

Crill Ratio of Fibrous Binder

In the present disclosure, "crill ratio" is a ratio between amounts of reduction for transmitted light in the ultraviolet region and the infrared region, the reduction being from light incident on slurry of the fibrous binder. Fibrils resulting from abrasion of fiber walls of fibers (bodies or main bodies of the fibers) by processing, such as rubbing or beating/refining, and having diameters that are about 1/100 of the diameters of the fibers scatter and absorb light that is mainly in the ultraviolet region regardless of whether the fibrils remain on the fibers or are separate from the fibers and floating, transmitted light of the light in the ultraviolet region is reduced in amount as compared to the incident light, and the amount of this reduction correlates with the total surface area of the fibrils. By contrast, fibers that are not fibrils scatter and absorb light that is mainly in the infrared region, transmitted light of the light in the infrared region is reduced in amount as compared to the incident light, and the amount of this reduction correlates with the total surface area of the fibers that are not fibrils. Therefore, the crill ratio serves as an indicator indicating the degree of fibrillation of the fibrous binder. A value of the crill ratio according to the present disclosure can be found by a measurement method used in Examples described below.

The fibrous binder preferably has a crill ratio ranging from 1.25 to 3.00. The crill ratio being in this range contributes to formation of a fibrous formed product having sufficient strength.

In terms of further pursuit of strength of the fibrous formed product, the lower limit of the crill ratio may be more preferably 1.30 or more and even more preferably 1.35 or more.

The upper limit of the crill ratio may be more preferably 2.80, 2,60, or 2.40 or less.

Fineness Ratio (%) of Fibrous Binder

In the present disclosure, a fineness ratio is an indicator indicating a percentage of fine fibers having fiber lengths less than 0.2 mm. A value of the fineness ratio according to the present disclosure can be found by a measurement method used in Examples described below. Fibers resulting from excessive grinding in the process of fibrillation of fibers and having become finer to be less than 0.2 mm in fiber length are considered to have lower contribution to binding of the formed fiber product.

The fibrous binder preferably has a fineness ratio ranging from 10 to 95%. More specifically, the fineness ratio is as follows.

The upper limit value of the fineness ratio of the fibrous binder is preferably 95% or less. The fineness ratio being in this range contributes to formation of a fibrous formed product having sufficient strength. In terms of further pursuit of strength of the fibrous formed product, the upper limit of the fineness ratio of the fibrous binder may be more preferably 90% or less, and even more preferably 85, 80, 75, or 70% or less.

The lower limit value of the fineness ratio of the fibrous binder may be optionally set in terms of further pursuit of strength of the fibrous formed product, but normally may be preferably 10, 20, 30, or 40% or more.

## 2. Formed Fiber Product

The formed fiber product according to the present disclosure is a formed product including, as its constituent materials, a main fiber material and a fibrous binder. The shape of the formed product is not particularly limited, but examples of its preferable shape include a sheet shape and a plate shape. The above described fibrous binder of the present disclosure may be suitably used as the fibrous binder.

The main fiber material is a material that mainly composes the formed product. The content ratio between the main fiber material and the fibrous binder may be preferably 1 to 20 parts by weight of the fibrous binder to 100 parts by weight of the main fiber material.

For FRPs obtained by impregnation of nonwoven fabric (a formed fiber product) serving as a base material with a resin component serving as a matrix and curing of the impregnated nonwoven fabric, there have been many demands for minimization of the amount of the binder component in the nonwoven fabric. This is presumed to be because the binder has been considered to be an extra component in terms of making the best use of the inherent characteristics that the main fiber material has. However, manufacturing a formed fiber product, such as nonwoven fabric, having adequate strength just by using a main fiber material without using a binder at all is difficult, and in one aspect, binders have unavoidably been used as little as possible in manufacture of formed fiber products, such as nonwoven fabrics.

By contrast, using the above described given fibrous binder in the formed fiber product of the present disclosure enables the fibrous formed product to have sufficient strength. What is more, this fibrous formed product has come to be known to be excellent in strength, for example, even in a case where the fibrous formed product is further processed into the form of FRP.

The content ratio of the fibrous binder to 100 parts by weight of the main fiber material may preferably take any numerical value between 1 and 20 parts by weight. More specifically, examples of the content ratio of the fibrous binder to 100 parts by weight of the main fiber material may be 20, 19, 18, 17, 16, 15, 14, 13, 12, 11, 10, 9, 8, 7, 6, 5, 4, 3, 2, or 1 part/parts by weight.

In terms of a numerical range, the upper limit of the content ratio of the fibrous binder to 100 parts by weight of the main fiber material may be more preferably 18 parts by weight or less, and even more preferably 15, 13, or 10 parts by weight or less. On the other hand, the lower limit of the content ratio of the fibrous binder to 100 parts by weight of the main fiber material may be more preferably 2, 3, or 4 parts by weight or more.

The main fiber material and the fibrous binder may be mixed together by, for example, addition of the main fiber material and the fibrous binder into a liquid serving as a medium, such as water, and stirring the liquid added with the main fiber material and the fibrous binder. When the main fiber material and the fibrous binder are mixed together, other additives, for example, a dispersing agent and a viscous agent may be added.

Using a dispersing agent enables a hydrophobic main fiber material to have hydrophilicity and secondary agglomeration to be reduced by prompting repulsion between fibers. Examples of the dispersing agent may include polyoxyalkylene monophenyl ether, polyether urethane resin, and polyoxyethylene polyoxypropylene stearyl ether.

The content ratio of the dispersing agent to 100 parts by weight of the main fiber material may be preferably 1 to 20 parts by weight, and more preferably 3 to 10 parts by weight.

Using a viscous agent enables slurry to have viscosity and secondary agglomeration of a hydrophobic main fiber material to be reduced. Examples of the viscous agent include polyethylene oxide and sodium polyacrylate.

The content ratio of the viscous agent to 100 parts by weight of the main fiber material may be preferably 1 to 50 parts by weight, and more preferably 5 to 30 parts by weight.

Main Fiber Material

The main fiber material is not particularly limited and may be any fiber material that is able to be formed into woven fabric, knitted fabric, or nonwoven fabric, for example. The main fiber material may be inorganic fiber or organic fiber. Examples of the inorganic fiber may include carbon fiber, glass fiber, and metallic fiber. The organic fiber may be, for example: "natural fiber," such as cotton, hemp, or animal hair; "synthetic fiber" made from petroleum; cellulose fiber derived from wood; or "semi-synthetic fiber" or "regenerated fiber" made from a natural material by any of various kinds of processing thereof. Examples of the "synthetic fiber" may include polyamide fiber, polyester fiber, polyurethane fiber, polyvinyl alcohol fiber, pitch-based fiber, polyacrylonitrile (PAN) fiber, phenolic fiber, polyphenylene sulfide fiber, polyvinyl chloride fiber, polypropylene fiber, polyethylene fiber, and polystyrene fiber. Examples of the "regenerated fiber" obtained from a natural material may include rayon, cupra, and Lyocell.

Examples of the main fiber material may preferably include carbon fiber, glass fiber, metallic fiber, cellulosic fiber, regenerated fiber, semi-synthetic fiber, and synthetic fiber. More specifically, examples of the inorganic fiber may include carbon fiber, glass fiber, and metallic fiber, and examples of the organic fiber may include cellulosic fiber, pitch-based fiber, PAN fiber, phenolic fiber, PET fiber, aramid fiber, and polyphenylene sulfide fiber. Among these, more preferable examples of the main fiber material may include carbon fiber, glass fiber, PET fiber, and aramid fiber, and even more preferable examples of the main fiber material may include carbon fiber. Examples of the carbon fiber may include rayon-based carbon fiber, pitch-based carbon fiber, PAN-based carbon fiber, and phenol-based carbon fiber, and the carbon fiber may also be activated carbon fiber. One of these kinds of main fiber materials may be used alone or two or more of these kinds of main fiber materials may be used.

The carbon fiber may be carbon fiber that is to be used for the first time, recycled carbon fiber (regenerated carbon fiber), or fiber that is a mixture of the carbon fiber that is to be used for the first time and the recycled carbon fiber. In the present disclosure, "used for the first time" (or unused) in relation to the carbon fiber is used as a term opposite to the term, "recycled (or regenerated)" and refers to completely new fiber, for example, so-called virgin fiber, which is to be used for the first time after being manufactured as fiber and is not "recycled (or regenerated)" fiber. Furthermore, in the present disclosure, "recycled (or regenerated)" carbon fiber means fiber collected via regeneration using materials for the regeneration, the materials being in-process remnants that are generated in a production process and a CFRP product that has been used and eliminated as waste (carbon fiber that has been used once for some purpose). Furthermore, in the present disclosure, in relation to the carbon fiber, "recycled carbon fiber" may be referred to as "recycle carbon fiber," "recovered carbon fiber," or as generally called, "regenerated carbon fiber" (which may be referred to generally as recycled carbon fiber (abbreviation: rCF) in English).

Mean Fiber Length of Main Fiber Material

The main fiber material may preferably have a mean fiber length ranging from 1 to 100 mm. The mean fiber length being in this range contributes to formation of a fibrous formed product having sufficient strength. In further pursuit of strength of the fibrous formed product, more preferable upper limits and lower limits thereof may be as follows.

The lower limit of the mean fiber length of the main fiber material may be more preferably 2, 3, or 4, and even more preferably 5 mm or more.

The upper limit of the mean fiber length of the main fiber material may be more preferably 80, 60, 50, 40, or 30 mm or less, and even more preferably 20 mm or less.

Mean Fiber Diameter of Main Fiber Material

The main fiber material may preferably have a mean fiber diameter ranging from 1.0 to 50.0 $\mu$m. The mean fiber diameter being in this range contributes to formation of a fibrous formed product having sufficient strength. In terms of further pursuit of strength of the fibrous formed product, more preferable upper limits and lower limits thereof are as follows.

The lower limit of the mean fiber diameter of the main fiber material may be more preferably 2.0, 3.0, 4.0, or 5.0 $\mu$m or more, and even more preferably 6.0 $\mu$m or more.

The upper limit of the mean fiber diameter of the fibrous binder may be more preferably 40.0, 30.0, 20.0, or 15.0 $\mu$m or less, and even more preferably 10.0 $\mu$m or less.

In a preferred embodiment according to the present disclosure, regenerated carbon fiber (recycled carbon fiber: rCF) obtained by separation and recovery of carbon fiber included in FRP, for example, may be suitably used. Such regenerated carbon fiber normally has a fiber length shorter than the initial fiber length before processing of the carbon fiber into the FRP and has a rough surface, and thus even if the regenerated carbon fiber is processed into nonwoven fabric, the nonwoven fabric tends to have insufficient strength. However, using the above described fibrous binder according to the present disclosure enables nonwoven fabric to have sufficient strength, the nonwoven fabric using such regenerated carbon fiber as a fiber material. In another preferred embodiment, regenerated carbon fiber and new carbon fiber (unused carbon fiber) may be mixed together to be used as the main fiber material.

A method for formation into the formed fiber product, such as nonwoven fabric, is not particularly limited, and an ordinary method can be adopted. For example, in a method of manufacturing nonwoven fabric, a fiber sheet is able to be obtained using, as a material, the main fiber material that has been cut into adequate lengths and using a wet process.

A formed product according to the present disclosure may be made using, additionally to the above described fibrous binder and main fiber material, a material, such as another kind of a binder, for example. Examples of the material may include binders that may be used in paper manufacturing, such as starch, SBR, a polyvinyl alcohol aqueous solution, an unsaturated polyester aqueous solution, and an acrylic aqueous solution. Furthermore, a polyvinyl alcohol fibrous binder that is a wet thermal adhesion type binder, or composite fiber, such as core-sheath fiber, side by side fiber, or radially divided fiber, may be used. Specifically, examples of the composite fiber may include: a combination of polypropylene (core) and polyethylene (sheath); a combination of polypropylene (core) and ethylene vinyl alcohol (sheath); a combination of high-melting-point polyester (core) and low-melting-point polyester (sheath); and a combination of high-melting-point polyester (core) and polyethylene (sheath). Furthermore, fully melting fiber including only polyethylene or polypropylene may be used. Furthermore, any of various fibrillated fibrous binders may be used. Any of a wide range of binders including synthetic binders and naturally occurring binders are able to be used. Examples of the fibrillated fibrous binders may include acrylic fiber, polyethylene fiber, polypropylene fiber, polyacrylonitrile fiber, nylon fiber, and aramid fiber.

A preferred embodiment of the formed fiber product according to the present disclosure may be a formed fiber product that has been formed in a sheet shape. In a case where the formed fiber product is a sheet formed product, the formed fiber product may preferably have a basis weight ranging from 20 to 200 $g/m^2$.

The lower limit of the basis weight being at the above mentioned preferred value or more contributes to prevention of deficiency of tensile strength of the sheet formed product. In terms of preventing the deficiency of the tensile strength of the sheet formed product, the lower limit of the basis weight may be more preferably 30 $g/m^2$, and even more preferably 40 $g/m^2$.

On the other hand, the upper limit of the basis weight being at the above mentioned preferred value or less enables removal of moisture in the manufacturing process and facilitates drying. In terms of ease of drying, the upper limit of the basis weight may be more preferably 190, 180, or 170 $g/m^2$, and even more preferably 160 or 150 $g/m^2$.

The formed fiber product according to the present disclosure may preferably have a density ranging from 0.05 to 0.20 $g/cm^3$.

The lower limit of the density being at the above preferred value or more contributes to improvement of the composite balance with respect to the resin in processing into FRP, for example. In terms of such composite balance with respect to the resin, the lower limit of the density may be more preferably 0.06 or 0.07 $g/cm^3$ or more, and even more preferably 0.08 or 0.09 $g/cm^3$ or more.

The upper limit of the density being at the above mentioned preferred value or less, on the other hand, facilitates impregnation with the resin in the processing into FRP, for example. In terms of the impregnation with the resin, the upper limit of the density may be more preferably 0.19 or 0.18 $g/cm^3$, and even more preferably 0.17 or 0.16 $g/cm^3$.

The formed fiber product according to the present disclosure can be prepared to have adequate tensile strength. The formed fiber product according to the present disclosure may be prepared as appropriate according to the need with respect to the tensile strength. There may be several preparation means for the tensile strength, and for example, the tensile strength may be adjusted by the amount of the fibrous binder included.

In a case where measurement is performed according to a specific test method (using a specimen having a width of 15 mm and a length of 150 mm) conducted for Examples described in detail below, the formed fiber product according to the present disclosure may be prepared to have a tensile strength of, for example, at least 0.06 or 0.07 kN/mm or more. The formed fiber product may be prepared to have a higher tensile strength of, for example, 0.10, 0.15, 0.19, 0.21, or 0.22 kN/mm or more, or an even higher tensile strength of 0.23, 0.25, 0.30, or 0.40 kN/mm or more.

## 3. Application of Formed Fiber Product

(3.1) The formed fiber product according to the present disclosure is applicable to a very wide range of uses. For example, various FRPs can be obtained by: impregnation of the formed fiber product according to the present disclosure and processed into a sheet shape (also referred to as the formed fiber product sheet) with resin serving as a matrix; and curing thereof. Examples of the FRPs may include glass fiber reinforced plastics, carbon fiber reinforced plastics, boron fiber reinforced plastics, and aramid fiber reinforced plastics.

(3.2) In a case where activated carbon fiber is used as a main material of the formed fiber product according to the present disclosure, the formed fiber product can be used as an adsorbing material for the liquid phase and the gas phase. This adsorbing material may be suitably used in, for example, a chemical filter for water purification or a semiconductor manufacturing clean room.

**Examples**

The present invention will hereinafter be described more specifically by reference to Examples but the technical scope (or technical range) of the invention presented by the present disclosure is not to be limited to Examples below. Furthermore, in a case where the invention presented by the present disclosure is defined using numerical values, the following methods including measurement methods, calculation methods, and evaluation methods can be used as ways of finding the numerical values.

Example FB1 (Fibrous Binder)

(1) Adjustment of Pulp Slurry

Unrefined LBKP (Leaf Bleached Kraft Pulp) (manufactured by Nippon Paper Industries Co., Ltd.) in an amount of 300 g was defibrated and 3.0% (W/V) slurry was obtained.

(2) Fibrillation

The obtained pulp slurry was fibrillated by circulation operation for eleven passes using a single disc refiner, was thereafter diluted with water, and 0.5% (W/V) slurry having freeness of 32 ml, a mean fiber length of 0.78 mm, a mean fiber diameter of 20.8 $\mu$m, a crill ratio of 1.37, and a fineness ratio of 48.4% was thereby obtained.

Example FB2 (Fibrous Binder)

(1) Adjustment of Pulp Slurry

Unrefined NBKP (Needle Bleached Kraft Pulp) (manufactured by Nippon Paper Industries Co., Ltd.) in an amount of 300 g was defibrated and 3.0% (W/V) slurry was obtained.

(2) Fibrillation

The obtained pulp slurry was fibrillated by circulation operation for four passes using a single disc refiner, was thereafter diluted with water, and 0.5% (W/V) slurry having freeness of 15 ml, a mean fiber length of 1.03 mm, a mean fiber diameter of 28.8 $\mu$m, a crill ratio of 1.63, and a fineness ratio of 49.9% was thereby obtained.

Example FB3 (Fibrous Binder)

(1) Adjustment of Pulp Slurry

Similarly to Example FB2(1), 3.0% (W/V) slurry was obtained.

(2) Fibrillation

The obtained pulp slurry was fibrillated by circulation operation for ten passes using a single disc refiner, was thereafter diluted with water, and 0.5% (W/V) slurry having freeness of 0 ml, a mean fiber length of 0.56 mm, a mean fiber diameter of 25.6 $\mu$m, a crill ratio of 2.14, and a fineness ratio of 59.3% was thereby obtained.

Comparative Example FB1 (Fibrous Binder)

(1) Preparation of Chemically Denatured Pulp

Unrefined NBKP (manufactured by Nippon Paper Industries Co., Ltd.) in an amount of 40 kg was added to 4000 L of an aqueous solution having, dissolved therein, 312 g of TEMPO (manufactured by Sigma-Aldrich Co. LLC) (0.05 mmol to 1 g of absolutely dried cellulose) and 4112 g of sodium bromide (1.0 mmol to 1g of absolutely dried cellulose), and the aqueous solution added with the unrefined NBKP was stirred. Subsequently, an aqueous solution of sodium hypochlorite was added to the aqueous solution so that 5.5 mmol/g of sodium hypochlorite was contained therein to start an oxidation reaction at room temperature. For decrease in pH during the reaction, a 3 M sodium hydroxide aqueous solution was sequentially added to adjust the pH to 10. The reaction was ended when the sodium hypochlorite therein was consumed and the pH in the system no longer changed. After adjusting the pH to 2 by adding hydrochloric acid to the reaction mixture,

EP 4 610 424 A1

the pulp was washed with water sufficiently by repeating dehydration and dilution with water, the washed pulp was dehydrated until the pulp solid concentration became 20% by weight, and chemically denatured pulp containing 1.4 mmol/g of carboxyl groups was thereby obtained.

(2) Fibrillation

The chemically denatured pulp obtained was dispersed in water, sodium hydroxide was added thereto, the mixture was stirred, and 1.1% (W/V) slurry was obtained at pH of 7.7. Using a monoflow double disk refiner, 4300 kg of the obtained slurry was fibrillated by circulation operation for 20 passes under a circulation rate of 80%, was thereafter diluted with water, and 0.5% (W/V) slurry having freeness of 0 ml, a mean fiber length of 0.29 mm, a mean fiber diameter of 30.3 $\mu$m, a crill ratio of 3.33, and a fineness ratio of 99.8% was thereby obtained.

Comparative Example FB2 (Fibrous Binder)

(1) Adjustment of Pulp Slurry

Similarly to Example FB1(1), 3.0% (W/V) slurry was obtained.

(2) Dilution

The obtained pulp slurry was diluted with water and 0.5% (W/V) slurry having freeness of 620 ml, a mean fiber length of 0.94 mm, a mean fiber diameter of 19.8 $\mu$m, a crill ratio of 0.83, and a fineness ratio of 30.7% was thereby obtained.

Comparative Example FB3 (Fibrous Binder)

(1) Adjustment of Pulp Slurry

Similarly to Example FB1(1), 3.0% (W/V) slurry was obtained.

(2) Fibrillation

The obtained pulp slurry was fibrillated by circulation operation for five passes using a single disc refiner, was thereafter diluted with water, and 0.5% (W/V) slurry having freeness of 78 ml, a mean fiber length of 0.83 mm, a mean fiber diameter of 20.2 $\mu$m, a crill ratio of 1.22, and a fineness ratio of 42.6% was thereby obtained.

Comparative Example FB4 (Fibrous Binder)

(1) Adjustment of Pulp Slurry

Similarly to Example FB2(1), 3.0% (W/V) slurry was obtained.

(2) Dilution

The obtained pulp slurry was diluted with water and 0.5% (W/V) slurry having freeness of 650 ml, a mean fiber length of 2.11 mm, a mean fiber diameter of 28.0 $\mu$m, a crill ratio of 0.98, and a fineness ratio of 13.5% was thereby obtained.

Comparative Example FB5 (Fibrous Binder)

(1) Adjustment of Pulp Slurry

Similarly to Example FB2(1), 3.0% (W/V) slurry was obtained.

(2) Fibrillation

The obtained pulp slurry was fibrillated by circulation operation for two passes using a single disc refiner, was thereafter diluted with water, and 0.5% (W/V) slurry having freeness of 362 ml, a mean fiber length of 1.80 mm, a mean fiber diameter of 27.6 μm, a crill ratio of 1.20, and a fineness ratio of 25.7% was thereby obtained.

Example S1 (Formed Fiber Product Sheet) Combination (1): 94% (W/W) regenerated carbon fiber and 6% (W/W) fibrous binder

At room temperature, using a mixer for professional use having electric power of 2800 W and a volume of 3.9 L, 0.08 g of a dispersing agent (an aqueous solution of polyether polyurethane resin manufactured by Meisei Chemical Works, Ltd. and having a model number of PULSET HA) and 140 g of a viscous agent (a 0.1% (W/W) aqueous solution of polyethylene oxide manufactured by Meisei Chemical Works, Ltd. and having a model number of ALKOX SK) were added into 700 ml of water, the mixture was stirred evenly, 1.33 g of regenerated carbon fiber (manufactured by Carbon Fiber Recycle Industry Co. Ltd., which is 9 mm sieved product and has a mean fiber diameter of 7 μm, a mean fiber length of 10 mm, and a moisture content of 1.4%, the sieved product resulting from secondary heating of remnants having a model number of T800SC manufactured by Toray Industries, Inc.) serving as a main fiber material and 16.8 g of the fibrous binder of Example FB1 were thereafter added to the mixture, the mixture was then stirred for 6 minutes at a rotation speed of 15000 rpm, and slurry was thereby obtained. The slurry was made into paper by hand using a circular-type (diameter: 16 mm) hand papermaking sheet machine (manufactured by Tozai Seiki Corporation), the paper was subjected to primary pressing (five minutes) and secondary pressing (two minutes) at a standard pressing pressure of 410 ± 10 kPa conforming to JIS P8222:2015 using AUTOMATIC SHEET PRESS (KUMAGAI RIKI KOGYO Co., Ltd.), the pressed paper was thereafter dried for 30 minutes at 50°C with a drier, and a formed fiber product sheet of Example S1(1) was thereby obtained.

Combination (2): 94% (W/W) carbon fiber and 6% (W/W) fibrous binder

A formed fiber product sheet of Example S1(2) was obtained in the same manner as the combination (1), except that 1.33 g of carbon fiber (manufactured by Toray Industries, Inc. and having a model number of T700SC-12K-50C, a mean fiber diameter of 7 μm, a mean fiber length of 12 mm, and a moisture content of 1.0%) was used as the main fiber material.

Combination (3): 94% (W/W) glass fiber and 6% (W/W) fibrous binder

A formed fiber product sheet of Example S1(3) was obtained in the same manner as the combination (1), except that 1.40 g of glass fiber (manufactured by PFG Fiber Glass Corporation and having a model number of E225, a mean fiber diameter of 7 μm, a mean fiber length of 5 mm, and a moisture content of 6.0%) was used as the main fiber material.

Combination (4): 94% (W/W) PET fiber and 6% (W/W) fibrous binder

A formed fiber product sheet of Example S1(4) was obtained in the same manner as the combination (1), except that 1.40 g of PET fiber (manufactured by TEIJIN LIMITED and having a model number of TA04N SD 0.6×5, a mean fiber diameter of 7 μm, a mean fiber length of 5 mm, and a moisture content of 5.9%) was used as the main fiber material.

Combination (5): 94% (W/W) aramid fiber and 6% (W/W) fibrous binder

A formed fiber product sheet of Example S1(4) was obtained in the same manner as the combination (1), except that 1.43 g of aramid fiber (Kevlar (registered trademark) aramid fiber staple of 1.7 dtex, manufactured by DU PONT-TORAY CO., LTD. and having a mean fiber diameter of 15 μm, a mean fiber length of 6 mm, and a moisture content of 8.2%) was used as the main fiber material.

Combination (6): 97% (W/W) regenerated carbon fiber and 3% (W/W) fibrous binder

A formed fiber product sheet of Example S1(5) was obtained in the same manner as the combination (1), except that 1.38 g of the regenerated carbon fiber of the combination (1) was used as the main fiber material and 8.4 g of the fibrous binder of Example FB1 was used.

Example S2 (Formed Fiber Product Sheet)

Five kinds of formed fiber product sheets of Example S2(1), Example S2(2), Example S2(3), Example S2(4), Example S2(5), and Example S2(6) were obtained respectively in the same manner as Examples S1(1) to S1(6), except that the fibrous binder of Example FB2 was used.

Combination (1): 94% (W/W) regenerated carbon fiber and 6% (W/W) fibrous binder
Combination (2): 94% (W/W) carbon fiber and 6% (W/W) fibrous binder
Combination (3): 94% (W/W) glass fiber and 6% (W/W) fibrous binder
Combination (4): 94% (W/W) PET fiber and 6% (W/W) fibrous binder
Combination (5): 94% (W/W) aramid fiber and 6% (W/W) fibrous binder
Combination (6): 97% (W/W) regenerated carbon fiber and 3% (W/W) fibrous binder

Example S3 (Formed Fiber Product Sheet)

Five kinds of formed fiber product sheets of Example S3(1), Example S3(2), Example S3(3), Example S3(4), Example S3(5), and Example S3(6) were obtained respectively in the same manner as Examples S1(1) to S1(6), except that the fibrous binder of Example FB3 was used.

Combination (1): 94% (W/W) regenerated carbon fiber and 6% (W/W) fibrous binder
Combination (2): 94% (W/W) carbon fiber and 6% (W/W) fibrous binder
Combination (3): 94% (W/W) glass fiber and 6% (W/W) fibrous binder
Combination (4): 94% (W/W) PET fiber and 6% (W/W) fibrous binder
Combination (5): 94% (W/W) aramid fiber and 6% (W/W) fibrous binder
Combination (6): 97% (W/W) regenerated carbon fiber and 3% (W/W) fibrous binder

Comparative Example S1 (Formed Fiber Product Sheet)

Five kinds of formed fiber product sheets of Comparative Example S1(1), Comparative Example S1(2), Comparative Example S1(3), Comparative Example S1(4), Comparative Example S1(5), and Comparative Example S1(6) were obtained respectively in the same manner as Examples S1(1) to S1(6), except that the fibrous binder of Example FB1 was used.

Combination (1): 94% (W/W) regenerated carbon fiber and 6% (W/W) fibrous binder
Combination (2): 94% (W/W) carbon fiber and 6% (W/W) fibrous binder
Combination (3): 94% (W/W) glass fiber and 6% (W/W) fibrous binder
Combination (4): 94% (W/W) PET fiber and 6% (W/W) fibrous binder
Combination (5): 94% (W/W) aramid fiber and 6% (W/W) fibrous binder
Combination (6): 97% (W/W) regenerated carbon fiber and 3% (W/W) fibrous binder

Comparative Example S2 (Formed Fiber Product Sheet)

Five kinds of formed fiber product sheets of Comparative Example S2(1), Comparative Example S2(2), Comparative Example S2(3), Comparative Example S2(4), Comparative Example S2(5), and Comparative Example S2(6) were obtained respectively in the same manner as Examples S1(1) to S1(6), except that the fibrous binder of Comparative Example FB2 was used.

Combination (1): 94% (W/W) regenerated carbon fiber and 6% (W/W) fibrous binder
Combination (2): 94% (W/W) carbon fiber and 6% (W/W) fibrous binder
Combination (3): 94% (W/W) glass fiber and 6% (W/W) fibrous binder
Combination (4): 94% (W/W) PET fiber and 6% (W/W) fibrous binder
Combination (5): 94% (W/W) aramid fiber and 6% (W/W) fibrous binder
Combination (6): 97% (W/W) regenerated carbon fiber and 3% (W/W) fibrous binder

Comparative Example S3 (Formed Fiber Product Sheet)

Five kinds of formed fiber product sheets of Comparative Example S3(1), Comparative Example S3(2), Comparative Example S3(3), Comparative Example S3(4), Comparative Example S3(5), and Comparative Example S3(6) were obtained respectively in the same manner as Examples S1(1) to S1(6), except that the fibrous binder of Comparative Example FB3 was used.

Combination (1): 94% (W/W) regenerated carbon fiber and 6% (W/W) fibrous binder
Combination (2): 94% (W/W) carbon fiber and 6% (W/W) fibrous binder
Combination (3): 94% (W/W) glass fiber and 6% (W/W) fibrous binder

Combination (4): 94% (W/W) PET fiber and 6% (W/W) fibrous binder
Combination (5): 94% (W/W) aramid fiber and 6% (W/W) fibrous binder
Combination (6): 97% (W/W) regenerated carbon fiber and 3% (W/W) fibrous binder

Comparative Example S4 (Formed Fiber Product Sheet)

Five kinds of formed fiber product sheets of Comparative Example S4(1), Comparative Example S4(2), Comparative Example S4(3), Comparative Example S4(4), Comparative Example S4(5), and Comparative Example S4(6) were obtained respectively in the same manner as Examples S1(1) to S1(6), except that the fibrous binder of Comparative Example FB4 was used.

Combination (1): 94% (W/W) regenerated carbon fiber and 6% (W/W) fibrous binder
Combination (2): 94% (W/W) carbon fiber and 6% (W/W) fibrous binder
Combination (3): 94% (W/W) glass fiber and 6% (W/W) fibrous binder
Combination (4): 94% (W/W) PET fiber and 6% (W/W) fibrous binder
Combination (5): 94% (W/W) aramid fiber and 6% (W/W) fibrous binder
Combination (6): 97% (W/W) regenerated carbon fiber and 3% (W/W) fibrous binder

Comparative Example S5 (Formed Fiber Product Sheet)

Five kinds of formed fiber product sheets of Comparative Example S5(1), Comparative Example S5(2), Comparative Example S5(3), Comparative Example S5(4), Comparative Example S5(5), and Comparative Example S5(6) were obtained respectively in the same manner as Examples S1(1) to S1(6), except that the fibrous binder of Comparative Example FB5 was used.

Combination (1): 94% (W/W) regenerated carbon fiber and 6% (W/W) fibrous binder
Combination (2): 94% (W/W) carbon fiber and 6% (W/W) fibrous binder
Combination (3): 94% (W/W) glass fiber and 6% (W/W) fibrous binder
Combination (4): 94% (W/W) PET fiber and 6% (W/W) fibrous binder
Combination (5): 94% (W/W) aramid fiber and 6% (W/W) fibrous binder
Combination (6): 97% (W/W) regenerated carbon fiber and 3% (W/W) fibrous binder

Various items related to characteristics, such as shapes and physical properties, and performance, of the fibrous binders, the main fiber materials, and the formed fiber products were measured and evaluated by methods described below. Numerical values and evaluation related to various characteristics, such shapes and physical properties, and performance, which are disclosed herein can be found by the following measurement methods and evaluation methods.

Freeness of Fibrous Binder

Freeness of each fibrous binder was measured by a Canadian standard freeness tester (manufactured by Tozai Seiki Corporation). The term, "freeness" is also referred to as "degree of beating/refining."

Fiber Physical Property Evaluation Method

For each fibrous binder, a mean fiber length (mm), a mean fiber diameter ($\mu$m), a crill ratio, and a fineness ratio (%) were measured as follows. Furthermore, for each main fiber material, a mean fiber length (mm), a mean fiber diameter ($\mu$m), and a moisture content (%) were measured as follows.

Mean Fiber Length

(1) Fiber Length of Fibrous Binder

Fibers having fiber lengths less than 0.2 mm were removed, fibers having fiber lengths of 0.2 mm or more were diluted so that 0.1 g of the solid fibrous binder was contained in 300 cc of slurry, and the slurry was measured by use of L & W Fiber Tester Plus Code 912 (manufactured by Lorentzen & Wettre Ltd.).

(2) Fiber Length of Main Fiber Material (Regenerated Carbon Fiber)

In consideration of the fact that unevenness of the regenerated carbon fiber is large, 20 fiber bundles were randomly extracted and actually measured one by one using vernier calipers, and their mean value was calculated.

(3) Fiber Length of Main Fiber Material (Except Regenerated Carbon Fiber)

Numerical values for the mean fiber lengths (or cut sizes) given by the providers were adopted.

Mean Fiber Diameter

(1) Mean Fiber Diameter of Fibrous Binder

Fibers having fiber lengths less than 0.2 mm were removed, fibers having fiber lengths of 0.2 mm or more were diluted so that 0.1 g of the solid fibrous binder was contained in 300 cc of slurry, and the slurry was measured by use of L & W Fiber Tester Plus Code 912 (manufactured by Lorentzen & Wettre Ltd.).

(2) Mean Fiber Diameter of Main Fiber Material

The mean value of fiber diameters of each main fiber material was calculated by randomly extracting 10 fibers from an image of a magnification of 500 and actually measuring the 10 fibers, by use of JSM-7900F Schottky Field Emission Scanning Electron Microscope (manufactured by JEOL Ltd.) .

Moisture Content of Main Fiber Material

The moisture content of each main fiber material was found by using Halogen Moisture Analyzer HB43 (manufactured by Mettler-Toledo Ltd.).

Crill Ratio

Ultraviolet or infrared light was caused to be incident on slurry of each fibrous binder, amounts of reduction for transmitted light from the incident light were found respectively for the case of the ultraviolet light source and the case of the infrared light source, and a crill ratio was calculated on the basis of Equation 1 below using the amount of ultraviolet reduction and the amount of infrared reduction. The tested slurry was prepared by dilution such that 0.1 g of the solid fibrous binder was contained in 300 cc of the slurry. L & W Fiber Tester Plus Code 912 (manufactured by Lorentzen & Wettre Ltd.) was used as the measurement device.

$$\text{Equation 1}$$

$$(CR) = (UVR)/(IRR)$$

In Equation 1, CR, UVR, and IRR are as follows.

CR: crill ratio
UVR: amount of ultraviolet reduction
IRR: amount of infrared reduction

Fineness Ratio

The percentage of fine fibers (fibers having fiber lengths less than 0.2 mm), that is, the fineness ratio was calculated by Equation 2 below.

$$\text{Equation 2}$$

$$(FR) = (FFL)/(WFL) \times 100 \ (\%)$$

In Equation 2, FR, FFL, and WFL are as follows.

FR: fineness ratio

FFL: The total of lengths of the fine fibers (fibers having fiber lengths less than 0.2 mm)

WFL: The total of lengths of all fibers (the fibers having fiber lengths less than 0.2 mm and fibers having fiber lengths of 0.2 mm or more)

As to the FFL and WFL, 0.1 g of the solid fibrous binder was diluted so that 300 cc of slurry was obtained and values measured using L & W Fiber Tester Plus Code 912 (manufactured by Lorentzen & Wettre Ltd.) were used as the FFL and WFL.

Dimensions and Weight of Formed Fiber Product

Dimensions of each formed fiber product were found by measurement using, for example, a ruler, as follows. The formed fiber product that had been subjected to humidity control overnight in an atmosphere at 23°C and an RH of 50% was used as the measurement sample. The weight of the formed fiber product that has been subjected to the humidity control was measured using an electrobalance. Using the obtained measurement values, the basis weight and the density of the formed fiber product were calculated as follows.

Thickness of Formed Fiber Product

Using Automatic Up-and-down Thickness Micrometer TM600 (manufactured by KUMAGAI RIKI KOGYO Co., Ltd.), the sheet thickness (unit: $\mu$m) of each sheet formed fiber product was measured at a pressurized surface pressure of 100 kPa.

Basis Weight of Formed Fiber Product

The basis weight (unit: $g/m^2$) of the sheet formed fiber product was found from its weight and area.

Density of Formed Fiber Product

The density (unit: $g/cm^3$) of the formed fiber product was found by dividing the basis weight (unit: $g/m^2$) of the formed fiber product by the sheet thickness (unit: $\mu$m) of the formed fiber product. The basis weight and the sheet thickness of the formed fiber product were calculated from results of the measurement according to the above described methods.

Tensile Strength of Formed Fiber Product

The sheet formed fiber product was subjected to humidity control for 12 hours at 23°C and 50%, a test piece (having a width of 15 mm and a length of 150 mm) was cut out from the sheet formed fiber product in that atmosphere, and the tensile strength (kN/m) was measured by use of L & W Tensile Tester Code 066 ((manufactured by Lorentzen & Wettre Ltd.).

Results of the measurement for the fibrous binders used as binding components are listed in Table 1-1. Results of the measurement for sheet formed regenerated carbon fiber products of the combination (1) (94% regenerated carbon fiber and 6% binding component) are listed in Table 1-2. Results of the measurement for sheet formed carbon fiber products of the combination (2) (94% carbon fiber and 6% binding component) are listed in Table 1-3. Results of the measurement for sheet formed glass fiber products of the combination (3) (94% glass fiber and 6% binding component) are listed in Table 1-4. Results of the measurement for sheet formed PET fiber products of the combination (4) (94% PET fiber and 6% binding component) are listed in Table 1-5. Results of the measurement for sheet formed aramid fiber products of the combination (5) (94% aramid fiber and 6% binding component) are listed in Table 1-6. Results of the measurement for sheet formed regenerated carbon fiber products of the combination (6) (94% regenerated carbon fiber and 6% binding component) are listed in Table 1-7.

Table 1-1

| Table 1-1 : Binding Components (Binders) | | | | | | |
|---|---|---|---|---|---|---|
| | Type of binding component | Freeness (ml) | Mean fiber length (mm) | Mean fiber diameter (μm) | Crill ratio | Fineness ratio (%) |
| Example FB1 | Fibrillated LBKP fiber | 32 | 0.78 | 20.8 | 1.37 | 48.4 |
| Example FB2 | Fibrillated NBKP fiber | 15 | 1.03 | 28.8 | 1.63 | 49.9 |
| Example FB3 | Fibrillated NBKP fiber | 0 | 0.56 | 25.6 | 2.14 | 59.3 |
| Comparative Example FB1 | Fibrillated NBKP fiber | 0 | 0.29 | 30.3 | 3.33 | 99.8 |
| Comparative Example FB2 | Unrefined LBKP fiber | 620 | 0.94 | 19.8 | 0.83 | 30.7 |
| Comparative Example FB3 | Fibrillated LBKP fiber | 78 | 0.83 | 20.2 | 1.22 | 42.6 |
| Comparative Example FB4 | Unrefined NBKP fiber | 650 | 2.11 | 28.0 | 0.98 | 13.5 |
| Comparative Example FB5 | Fibrillated NBKP fiber | 362 | 1.80 | 27.6 | 1.20 | 25.7 |

Table 1-2

| Table 1-2: Formed Fiber Products (Sheets), Combination (1) | | | | | | | |
|---|---|---|---|---|---|---|---|
| | Combination (1): 94% regenerated carbon fiber and 6% binding component | | | | | | |
| | Type of main fiber | Type of binding component | Drying | Basis weight (g/m²) | Thickness (μm) | Density (g/cm³) | Tensile strength (kN/m) |
| Example S1(1) | Regenerated carbon fiber | Example FB1 | Warm air at 50°C for 30 minutes | 68 | 454 | 0.15 | 0.52 |
| Example S2(1) | Regenerated carbon fiber | Example FB2 | | 68 | 455 | 0.15 | 0.70 |
| Example S3(1) | Regenerated carbon fiber | Example FB3 | | 68 | 449 | 0.15 | 1.62 |
| Comparative Example S1(1) | Regenerated carbon fiber | Comparative Example FB1 | | 70 | 465 | 0.15 | 0.10 |
| Comparative Example S2(1) | Regenerated carbon fiber | Comparative Example FB2 | | 72 | 471 | 0.15 | 0[1] |
| Comparative Example S3(1) | Regenerated carbon fiber | Comparative Example FB3 | | 68 | 457 | 0.15 | 0.20 |
| Comparative Example S4(1) | Regenerated carbon fiber | Comparative Example FB4 | | 70 | 475 | 0.15 | 0[1] |
| Comparative Example S5(1) | Regenerated carbon fiber | Comparative Example FB5 | | 68 | 465 | 0.15 | 0.20 |
| 1) Broken immediately after start of tensile strength test | | | | | | | |

Table 1-3

| Table 1-3: Formed Fiber Products (Sheest), Combination (2) | | | | | | | |
|---|---|---|---|---|---|---|---|
| | Combination (2): 94% carbon fiber and 6% binding component | | | | | | |
| | Type of main fiber | Type of binding component | Drying | Basis weight (g/m$^2$) | Thickness ($\mu$m) | Density (g/cm$^3$) | Tensile strength (kN/m) |
| Example S1(2) | Carbon fiber | Example FB1 | Warm air at 50°C for 30 minutes | 69 | 492 | 0.14 | 0.41 |
| Example S2(2) | Carbon fiber | Example FB2 | | 68 | 485 | 0.14 | 0.58 |
| Example S3(2) | Carbon fiber | Example FB3 | | 69 | 485 | 0.14 | 1.27 |
| Comparative Example S1(2) | Carbon fiber | Comparative Example FB1 | | 69 | 483 | 0.14 | 0.08 |
| Comparative Example S2(2) | Carbon fiber | Comparative Example FB2 | | 70 | 482 | 0.15 | 0[1] |
| Comparative Example S3(2) | Carbon fiber | Comparative Example FB3 | | 70 | 495 | 0.14 | 0.18 |
| Comparative Example S4(2) | Carbon fiber | Comparative Example FB4 | | 69 | 490 | 0.14 | 0[1] |
| Comparative Example S5(2) | Carbon fiber | Comparative Example FB5 | | 70 | 503 | 0.14 | 0.20 |
| 1) Broken immediately after start of tensile strength test | | | | | | | |

Table 1-3

| Table 1-4: Formed Fiber Products (Sheets), Combination (3) | | | | | | | |
|---|---|---|---|---|---|---|---|
| | Combination (3): 94% glass fiber and 6% binding component | | | | | | |
| | Type of main fiber | Type of binding component | Drying | Basis weight (g/m$^2$) | Thickness ($\mu$m) | Density (g/cm$^3$) | Tensile strength (kN/m) |
| Example S1(3) | Glass fiber | Example FB1 | Warm air at 50°C for 30 minutes | 69 | 360 | 0.19 | 0.55 |
| Example S2(3) | Glass fiber | Example FB2 | | 69 | 357 | 0.19 | 0.72 |
| Example S3(3) | Glass fiber | Example FB3 | | 68 | 353 | 0.19 | 1.60 |
| Comparative Example S1(3) | Glass fiber | Comparative Example FB1 | | 69 | 357 | 0.19 | 0.09 |
| Comparative Example S2(3) | Glass fiber | Comparative Example FB2 | | 70 | 363 | 0.19 | 0[1] |
| Comparative Example S3(3) | Glass fiber | Comparative Example FB3 | | 69 | 360 | 0.19 | 0.18 |
| Comparative Example S4(3) | Glass fiber | Comparative Example FB4 | | 70 | 360 | 0.19 | 0[1] |
| Comparative Example S5(3) | Glass fiber | Comparative Example FB5 | | 69 | 356 | 0.19 | 0.19 |
| 1) Broken immediately after start of tensile strength test | | | | | | | |

Table 1-5

| Table 1-5: Formed Fiber Products (Sheets), Combination (4) | | | | | | | |
|---|---|---|---|---|---|---|---|
| | Combination (4): 94% PET fiber and 6% binding component | | | | | | |
| | Type of main fiber | Type of binding component | Drying | Basis weight (g/m²) | Thickness (μm) | Density (g/cm³) | Tensile strength (kN/m) |
| Example S1(4) | PET fiber | Example FB1 | Warm air at 50°C for 30 minutes | 69 | 309 | 0.22 | 0.46 |
| Example S2(4) | PET fiber | Example FB2 | | 70 | 317 | 0.22 | 0.55 |
| Example S3(4) | PET fiber | Example FB3 | | 70 | 313 | 0.22 | 1.15 |
| Comparative Example S1(4) | PET fiber | Comparative Example FB1 | | 70 | 317 | 0.22 | 0.08 |
| Comparative Example S3(4) | PET fiber | Comparative Example FB3 | | 70 | 320 | 0.22 | 0[1] |
| Comparative Example S2(4) | PET fiber | Comparative Example FB2 | | 69 | 312 | 0.22 | 0.18 |
| Comparative Example S5(4) | PET fiber | Comparative Example FB5 | | 69 | 315 | 0.22 | 0[1] |
| Comparative Example S4(4) | PET fiber | Comparative Example FB4 | | 70 | 318 | 0.22 | 0.19 |
| 1) Broken immediately after start of tensile strength test | | | | | | | |

Table 1-6

| Table 1-6: Formed Fiber Products (Sheets), Combination (5) | | | | | | | |
|---|---|---|---|---|---|---|---|
| | Combination (5): 94% aramid fiber and 6% binding component | | | | | | |
| | Type of main fiber | Type of binding component | Drying | Basis weight (g/m²) | Thickness (μm) | Density (g/cm³) | Tensile strength (kN/m) |
| Example S1(5) | Aramid fiber | Example FB1 | Warm air at 50°C for 30 minutes | 69 | 405 | 0.17 | 0.42 |
| Example S2(5) | Aramid fiber | Example FB2 | | 70 | 410 | 0.17 | 0.54 |
| Example S3(5) | Aramid fiber | Example FB3 | | 69 | 398 | 0.17 | 1.21 |
| Comparative Example S1(5) | Aramid fiber | Comparative Example FB1 | | 69 | 401 | 0.17 | 0[1] |
| Comparative Example S2(5) | Aramid fiber | Comparative Example FB2 | | 70 | 408 | 0.17 | 0[1] |
| Comparative Example S3(5) | Aramid fiber | Comparative Example FB3 | | 70 | 413 | 0.17 | 0.15 |
| Comparative Example S4(5) | Aramid fiber | Comparative Example FB4 | | 70 | 416 | 0.17 | 0[1] |
| Comparative Example S5(5) | Aramid fiber | Comparative Example FB5 | | 70 | 413 | 0.17 | 0.16 |
| 1) Broken immediately after start of tensile strength test | | | | | | | |

Table 1-7

| Table 1-7: Formed Fiber Products (Sheets), Combination (6) | | | | | | | |
|---|---|---|---|---|---|---|---|
| | Combination (6): 97% regenerated carbon fiber and 3% binding component | | | | | | |
| | Type of main fiber | Type of binding component | Drying | Basis weight (g/m$^2$) | Thickness ($\mu$m) | Density (g/cm$^3$) | Tensile strength (kN/m) |
| Example S1(6) | Regenerated carbon fiber | Example FB1 | Warm air at 50°C for 30 minutes | 70 | 578 | 0.12 | 0.23 |
| Example S2(6) | Regenerated carbon fiber | Example FB2 | | 69 | 579 | 0.12 | 0.28 |
| Example S3(6) | Regenerated carbon fiber | Example FB3 | | 69 | 566 | 0.12 | 0.66 |
| Comparative Example S1(6) | Regenerated carbon fiber | Comparative Example FB1 | | 68 | 569 | 0.12 | 0[1) |
| Comparative Example S2(6) | Regenerated carbon fiber | Comparative Example FB2 | | 70 | 583 | 0.12 | 0[1) |
| Comparative Example S3(6) | Regenerated carbon fiber | Comparative Example FB3 | | 70 | 590 | 0.12 | 0.10 |
| Comparative Example S4(6) | Regenerated carbon fiber | Comparative Example FB4 | | 69 | 582 | 0.12 | 0[1) |
| Comparative Example S5(6) | Regenerated carbon fiber | Comparative Example FB5 | | 69 | 588 | 0.12 | 0.09 |
| 1) Broken immediately after start of tensile strength test | | | | | | | |

**Claims**

1.  A formed fiber product, comprising:

    a main fiber material and a fibrous binder;
    a content ratio of 1 to 20 parts by weight of the fibrous binder to 100 parts by weight of the main fiber material; and
    a crill ratio of the fibrous binder, the crill ratio ranging from 1.25 to 3.00.

2.  The formed fiber product according to claim 1,
    wherein the fibrous binder has a mean fiber length ranging from 0.30 to 2.50 mm.

3.  The formed fiber product according to claim 1,
    wherein the main fiber material is one, two, or more kinds selected from a group consisting of carbon fiber, glass fiber, metallic fiber, natural fiber, cellulosic fiber, regenerated fiber, semi-synthetic fiber, and synthetic fiber.

4.  The formed fiber product according to claim 1,
    wherein the main fiber material is one, two, or more kinds selected from a group consisting of carbon fiber, glass fiber, PET fiber, and aramid fiber.

5.  The formed fiber product according to claim 1, wherein the main fiber material is carbon fiber.

6.  The formed fiber product according to claim 5,
    wherein the carbon fiber is carbon fiber to be used for the first time, recycled carbon fiber, or fiber that is a mixture of the carbon fiber to be used for the first time and the recycled carbon fiber.

7.  The formed fiber product according to claim 1,
    wherein the fibrous binder is fibrillated cellulose fiber.

8. The formed fiber product according to claim 1,
   wherein the fibrous binder has a fineness ratio of 95% or less.

9. A formed fiber-reinforced resin product, comprising:

   the formed fiber product according to any one of claims 1 to 8; and
   a resin component that the formed fiber product has been impregnated with.

10. A fibrous binder, comprising:

   fibrillated cellulose fiber having a crill ratio ranging from 1.25 to 3.00 and a fineness ratio of 95% or less,
   the fibrous binder being to be used in a formed fiber product.

## INTERNATIONAL SEARCH REPORT

| International application No. |
| --- |
| **PCT/JP2023/038647** |

**A. CLASSIFICATION OF SUBJECT MATTER**

*D21H 15/02*(2006.01)i; *B29B 11/16*(2006.01)i; *D21H 11/00*(2006.01)i; *D21H 13/00*(2006.01)i; *D21H 13/36*(2006.01)i; *B29K 105/12*(2006.01)n

FI: D21H15/02; D21H11/00; D21H13/00; D21H13/36; B29B11/16; B29K105:12

According to International Patent Classification (IPC) or to both national classification and IPC

**B. FIELDS SEARCHED**

Minimum documentation searched (classification system followed by classification symbols)

B29B11/16, B29B15/08-15/14, C08J5/04-5/10, C08J5/24, D04H1/00-18/04, D21B1/00-1/38, D21C1/00-11/14, D21D1/00-99/00, D21F1/00-13/12, D21G1/00-9/00, D21H11/00-27/42, D21J1/00-7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2020-158912 A (MITSUBISHI PAPER MILLS LTD.) 01 October 2020 (2020-10-01) | 1-10 |
| A | JP 2008-248441 A (DAICEL CHEMICAL INDUSTRIES LTD.) 16 October 2008 (2008-10-16) | 1-10 |
| A | JP 2022-070291 A (MITSUBISHI PAPER MILLS LTD.) 13 May 2022 (2022-05-13) | 1-10 |

☐ Further documents are listed in the continuation of Box C.　　☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **12 January 2024** | **23 January 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2023/038647**

| Patent document cited in search report | | | Publication date (day/month/year) | Patent family member(s) | Publication date (day/month/year) |
|---|---|---|---|---|---|
| JP | 2020-158912 | A | 01 October 2020 | (Family: none) | |
| JP | 2008-248441 | A | 16 October 2008 | (Family: none) | |
| JP | 2022-070291 | A | 13 May 2022 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014021366 A
- JP 2017057511 A